# EUROPÄISCHE PATENTSCHRIFT

(11) **EP 3 393 743 B1**
(45) Veröffentlichungstag und Bekanntmachung des Hinweises auf die Patenterteilung: **20.10.2021**
(21) Anmeldenummer: 16816702.1
(22) Anmeldetag: 22.12.2016
(51) Int. Cl.: B29C 44/04, B29C 44/44, B29K 23/00, B29K 25/00, B29K 67/00, B29C 35/08, B29C 44/34

(54) **VERFAHREN ZUR HERSTELLUNG EINES FORMKÖRPERS AUS EINEM PARTIKELSCHAUMMATERIAL**
METHOD FOR PRODUCING A MOLDED BODY FROM A PARTICLE FOAM MATERIAL
PROCÉDÉ POUR FABRIQUER UN CORPS MOULÉ À PARTIR D'UNE MATIÈRE DE MOUSSE PARTICULAIRE

(30) Priorität: 22.12.2015 AT 510982015
(43) Veröffentlichungstag der Anmeldung: 31.10.2018
(73) Patentinhaber: Fill Gesellschaft m.b.H., 4942 Gurten (AT)
(72) Erfinder: LUCHT, Mirjam, 90429 Nürnberg (DE); VETTER, Jörg, 90429 Nürnberg (DE)
(74) Vertreter: Burger, Hannes
(86) Internationale Anmeldenummer: PCT/EP2016/082394
(87) Internationale Veröffentlichungsnummer: WO 2017/109079

(56) Entgegenhaltungen:
- DE-A1-102013 012 515
- DE-A1-102013 225 132
- DE-C1- 10 009 665
- DE-C1- 19 860 611
- JP-A- 2000 290 420
- US-A- 5 620 636
- US-A- 6 165 300
- US-A1- 2014 259 329

## Beschreibung

Die Erfindung betrifft ein Verfahren zur Herstellung eines Formkörpers aus einem Partikelschaummaterial in einem verschließbaren Formhohlraum eines Formwerkzeugs, wie dies im Oberbegriff des Anspruch 1 beschrieben ist.

Eine Möglichkeit, das in Perlenform in den Formhohlraum eingebrachte Granulat zu einem Formkörper zu vereinen, besteht darin, dass im Bereich des Formnestes Dampfdüsen zum Zuführen des Heißdampfes in den Formhohlraum aus den hinterhalb der Formwände angeordneten Heiz- und Kühlkammern einmünden. Derartige Formen bzw. Vorrichtungen sind z.B. in den Druckschriften DE 30 32 271 A1, DE 38 36 875 A1, EP 0 180 351 B1, EP 0 193 975 A1 sowie der EP 0 379 857 B1 beschrieben. Nachteilig bei all diesen Vorrichtungen ist, dass die im Zuge des Schäumprozesses eingebrachte Feuchtigkeit aus dem hergestellten Formkörper nach dessen Entnahme aus dem Formhohlraum in einem eigenen Trocknungsvorgang zu entfernen ist.

Die GB 2 007 579 A beschreibt eine Vorrichtung sowie ein Verfahren zum Herstellen dünnwandiger Objekte aus einem aufschäumbaren Kunststoffmaterial. Die zweiteilige Form weist jeweils Grundkörper aus einem Kunststoffmaterial auf, wobei die Formwände des Formhohlraums mit einer Lage aus metallischem Werkstoff ausgekleidet sind. Die Einbringung der für den Aufschäumvorgang notwendigen Wärme erfolgt mittels Induktion, wobei in den beiden Grundkörpern im Nahbereich der Formwände eigene Kanäle angeordnet sind, in welchen die Leitungen aufgenommen sind. Die gleichen Kanäle dienen aber auch für die Durchleitung des Kühlmediums, um nach dem Aufschäumprozess das hergestellte Objekt zu kühlen. Das Treibgas, welches beim Aufschäumen aus dem Granulat entweicht, konnte ungehindert aus dem Formhohlraum entweichen.

Die US 3,971,471 A beschreibt einen aus aufschäumbarem Kunststoffgranulat hergestellten stapelfähigen Becher. Die vom Formhohlraum abgewendeten Seiten der Formwände sind von eigenen Kammern umgeben, in welche das Heizmedium für den Aufschäumprozess und nachfolgend das Kühlmedium zum Kühlen des hergestellten Bechers hindurchgeleitet wird. Die Zufuhr des Granulats erfolgt durch eine Zuleitung im Bodenbereich des herzustellenden Bechers, wobei der Formhohlraum im Bereich seines offenen Endbereichs mit einer Vakuumpumpe in Leitungsverbindung steht, um das Befüllen des Formhohlraums mit dem Granulat zu erleichtern. Die Zu- und Abfuhr von Wärme zum Granulat sowie dem hergestellten Becher erfolgt durch Heizung oder Kühlung der Formwände von deren dem Formhohlraum außenliegenden Seite. Auch hier konnte kein vollständiger Abschluss des Formhohlraums für den Aufschäumprozess erreicht werden.

Die US006165300A die den Oberbegriff des Anspruchs 1 offenbart, offenbart ein Verfahren zur Herstellung von wenigstens zweischichtigen Verbundkörpern mit einem ganz oder überwiegend aus einem Polymer bestehenden Trägermaterial und einer mit dieser fest verbundenen porösen Schicht aus einem geschäumten Polymer.

Aufgabe der vorliegenden Erfindung war es, die Nachteile des Standes der Technik zu überwinden und ein Verfahren zur Verfügung zu stellen, mittels dem ein Benutzer in der Lage ist, eine einfache und rasche Herstellung von Formkörpern aus einem aufschäumbaren Kunststoffgranulat vorzunehmen.

Diese Aufgabe wird durch das kennzeichnende Merkmal des Anspruch 1 gelöst.

Der Übergang der Wärme von der Wand in das Innere erfolgt durch Wärmeleitung und/oder Wärmestrahlung. Es ist somit nicht mehr erforderlich einen aufgeheizten Medienstrom, insbesondere Wasserdampf in das Innere des Formkörpers zu leiten. Dadurch wird nicht nur erreicht, dass das Partikelschaummaterial während des Erwärmens trocken bleibt, sondern auch, dass Inhomogenitäten im Formkörper, die ansonsten durch die lokalen Dampfzufuhröffnungen entstehen, verhindert werden. Die Erwärmung erfolgt somit frei von jeglicher Medienzufuhr in das Innere des Formhohlraumes.

Die Erfindung beschäftigt sich somit mit der Art der Einbringung der Wärmeenergie, nämlich durch die Wand des Formhohlraumes hindurch. Die Verteilung der Wärmeenergie innerhalb des Formhohlraumes erfolgt somit ebenfalls frei von Zwangskonvektion. Dies schließt jedoch eine thermisch bedingte Bewegung von Luft zwischen dem anfangs lose geschütteten Partikelschaummaterial (Mikrogranulat bzw. Schaumperlengut) nicht aus. Jedoch erfolgt die Erwärmung frei von jeglicher Medienzufuhr in das Innere des Formhohlraumes. Ein weiterer, dadurch bedingter Vorteil der Erfindung besteht in der Vermeidung von Oberflächenmarkierungen auf dem Formteil (die im Stand der Technik durch Abformungen der Dampfdüsen entstehen).

Die Erfindung eignet sich insbesondere zur Herstellung dünner bis mittelstarker, aber (durch Verstärkungen, Dekore, Elektronik oder Befestigungselemente) anwendungsspezifisch funktionalisierter Partikelschaumstrukturen vorzugsweise mit anisotropen Eigenschaftsprofilen. Die Herstellung von Einstoff-Systemen und/oder Strukturen mit großen Wandstärken ist jedoch grundsätzlich ebenfalls möglich.

Das Verfahren ist besonders bevorzugt in Kombination mit einem Formwerkzeug, das aus einem ersten Werkzeugteil und einem zweiten Werkzeugteil, das vom ersten Werkzeugteil abnehmbar ist, gebildet wird. Dabei bildet vorzugsweise das erste Werkzeugteil eine Aufnahme für das Partikelschaummaterial und das zweite Werkzeugteil einen Deckel oder einen Stempel zum Verschließen der Aufnahme. Auf diese Weise kann das Partikelschaummaterial auf einfache Weise in die Form eingebracht werden und durch Verschließen der Form von der Umgebung abgeschottet werden.

Das Partikelschaummaterial ist vorzugsweise expandierfähiges Kunststoffmaterial.

Das Partikelschaummaterial kann grundsätzlich in Form eines noch nicht aufgeschäumten, eines teilweise oder vollständig aufgeschäumten Partikelschaummaterials, insbesondere Granulats oder Perlenschüttung, in den Formhohlraum eingebracht werden. Im Falle eines noch nicht bzw. nur teilweise aufgeschäumten Partikelschaummaterials kann sich dieses während des Schrittes (c) des Erwärmens weiter aufblähen. Bei bereits vollständig aufgeschäumtem Partikelschaummaterial dient die Erwärmung nur dem Verbinden der Granulat- bzw. Perlenschüttung durch Verkleben bzw. Schweißung ihrer Außenwände. Dadurch entstehen kohäsive Verbindungen von (Gleich)Materialien.

Eine besonders bevorzugte Ausführungsform zeichnet sich dadurch aus, dass im Schritt (c) die Wärme mittels eines Heizmediums, das durch zumindest einen in einer Wand des Formwerkzeuges verlaufenden Kanal geleitet wird, in das Formwerkzeug eingebracht wird und zwischen Kanal und Innenwand des Formhohlraumes durch Wärmeleitung übertragen wird. Der Wärmeeintrag in das Formwerkzeug erfolgt daher vorzugsweise strahlungslos, d.h. ohne Strahlungsquelle. Das Formwerkzeug ist dabei vorzugsweise - zumindest im Bereich zwischen dem zumindest einen Kanal und der Innenwand des Formhohlraumes - aus Metall gebildet (gute Wärmeleitfähigkeit).

Hier ist bevorzugt, wenn nach dem Verschließen des Formhohlraumes das in dem Formhohlraum eingebrachte Partikelschaummaterial durch das Formwerkzeug zusammengepresst wird, vorzugsweise vor und/oder während des Schrittes (c) des Erwärmens. Diese Maßnahme eignet sich insbesondere dann, wenn das Partikelschaummaterial kein Treibmittel (oder mit Treibmittel beladene Zusätze) enthält und somit nicht von sich aus expandiert.

Eine bevorzugte Ausführungsform zeichnet sich dadurch aus, dass in dem in Schritt (a) in den Formhohlraum eingebrachten Granulat ein Treibmittel enthalten ist oder dass ein Treibmittel gesondert vom Granulat in den Formhohlraum eingebracht wird, wodurch das Granulat im Schritt (c) mittels der eingebrachten Wärmeenergie expandiert und dabei der Formkörper in seiner Raumform durch die Geometrie des Formhohlraums ausgebildet wird.

Dabei wird ein Partikelschaummaterial, insbesondere expansionsfähiges Kunststoffmaterial in Granulatform in den Formhohlraum des Formwerkzeugs eingebracht, wobei im Granulat ein Treibmittel mit enthalten ist. Dann erfolgen das mechanische Verschließen des Formhohlraums und nachfolgend das Erwärmen des Formwerkzeugs, wodurch mittels der eingebrachten Wärmeenergie das Granulat von dem darin enthaltenen Treibmittel aufgeschäumt wird und dabei der Formkörper in seiner Raumform durch die Geometrie des Formhohlraums ausgebildet wird. Der so hergestellte Formkörper wird durch Kühlen des Formwerkzeugs verfestigt und kann nach Erreichen einer ausreichenden Formstabilität bzw. Eigenfestigkeit nach dem Öffnen des Formhohlraums aus diesem entfernt bzw. entnommen werden. Um zumindest einen Zutritt und/oder Austritt von Flüssigkeiten in und/oder aus dem geschlossenen Formhohlraum zu verhindern, wird in einer bevorzugten Ausführungsform vorgeschlagen, den Formhohlraum noch vor dem Schritt des Erwärmens des Formwerkzeugs flüssigkeitsdicht zu verschließen.

Damit kann innerhalb des Formhohlraums keinerlei Beeinflussung von einem sich außerhalb des Formhohlraums befindlichen flüssigen Medium erfolgen und auch keine Flüssigkeit aus dem Formhohlraum während der Aufschäum- und Abkühlprozesses entweichen. So kann auch ein Zutritt des Heiz- und/oder Kühlmediums zum Granulat sowie zum nachfolgend hergestellten Formkörper sicher verhindert werden.

Weiters kann es vorteilhaft sein, wenn vor dem Schritt des Erwärmens des Formwerkzeugs der Formhohlraum zumindest flüssigkeitsdicht, vorzugsweise dampfdicht und/oder gasdicht verschlossen wird. Durch das flüssigkeitsdichte Verschließen wird ein Feuchtigkeitseintrag zuverlässig hintangehalten. Außerdem könnte in dieser Variante das Formwerkzeug zum Zwecke der Erwärmung in ein Wärmebad eingebracht werden, ohne dass dies negative Auswirkungen auf das Partikelschaummaterial im Inneren hat. Durch ein dampfdichtes Verschließen kann zusätzlich verhindert werden, dass Feuchtigkeit in Form von Dampf in das Innere des Formwerkzeuges gelangen kann. Ein gasdichtes Verschließen kann unter gegebenen Umständen bzw. im Falle begleitender Maßnahmen ebenfalls sinnvoll sein, insbesondere dann, wenn im Partikelschaummaterial kein Treibmittel vorhanden ist und das Verbinden der Partikel infolge Druckbeaufschlagung erfolgt. Bei Vorhandensein eines Treibmittels könnte auch noch ein Austritt des während des Aufschäumprozesses freigesetzten Treibgases aus dem Formhohlraum verhindert werden und dieses zur Druckbeaufschlagung im Inneren verwendet werden. So kann das Treibmittel auch noch nach dem Herstellvorgang des Formkörpers im Partikelschaummaterial, z.B. Kunststoffmaterial, bzw. dessen Zellstruktur eingelagert sein.

Eine andere Ausführungsform zeichnet sich dadurch aus, dass das in den Formhohlraum eingebrachte Granulat durch ein noch nicht vorgeschäumtes Mikrogranulat gebildet wird. Damit kann ein vorgelagerter Vorschäumprozess eingespart werden. So können Zeit- und Energieressourcen sowie gesonderte Anlageteile vermieden werden.

Eine weitere mögliche Ausführungsform hat die Merkmale, dass das in den Formhohlraum eingebrachte, noch nicht vorgeschäumtes Mikrogranulat direkt im Formhohlraum vorgeschäumt wird. Durch das Vorschäumen des Mikrogranulats direkt im Formhohlraum kann so die im Zuge des Vorschäumprozesses eingebrachte Wärmeenergie auch gleich ohne zusätzliche Abkühlung für den nachfolgenden Aufschäumprozess mit eingebracht und verwendet werden.

Eine weitere Ausbildung sieht vor, dass das Vorschäumen des Mikrogranulats (unter berührungsloser Energieeinbringung) mittels eines IR-Strahlers durchgeführt wird. So kann rasch der Vorschäumprozess gestartet werden. Darüber hinaus können zusätzliche Anlagenteile eingespart werden, da sich das Mikrogranulat bereits im Formhohlraum oder einer durch einen der Werkzeugteile gebildeten Aufnahmeraum befindet.

Eine andere Ausführungsform zeichnet sich dadurch aus, dass das in den Formhohlraum eingebrachte Granulat aus einem zumindest teilweise vorgeschäumten Mikrogranulat gebildet wird. Wird ein bereits vorgeschäumtes Mikrogranulat in Pelletsform oder Perlenform in den Formhohlraum eingebracht, kann so rascher die Formteilherstellung in jeweils kürzeren Zyklen erfolgen.

Eine weitere bevorzugte Ausführungsform zeichnet sich dadurch aus, dass das in den Formhohlraum eingebrachte Granulat mittels eines IR-Strahlers vorerwärmt wird. Damit kann bereits eine vorgelagerte berührungslose Wärmeeinbringung in das Granulat erfolgen, wobei damit die Zeitdauer des Aufschäumprozesses noch verkürzt werden kann.

Weiters kann es vorteilhaft sein, wenn vor dem Schritt des Einbringens des Granulats in den Formhohlraum das Granulat getrocknet wird. Damit kann ein zu hoher Feuchtigkeitsgehalt des hergestellten Formkörpers sowie ein nachträgliches Trocknen desselben vermieden werden.

Eine andere alternative Ausführungsform zeichnet sich dadurch aus, dass das in den Formhohlraum eingebrachte Partikelschaummaterial ausschließlich aus dem Granulat gebildet wird. Dadurch kann ein durchgängig sortenreiner Formteil hergestellt werden, welcher einfach einer nachträglichen Entsorgung bzw. einem Recyclingvorgang unterzogen werden kann. Eine weitere mögliche und gegebenenfalls alternative Ausführungsform hat die Merkmale, dass vor dem Schritt (b), vorzugsweise vor dem Schritt (a) zumindest ein Einlegeteil, insbesondere ein Befestigungselement oder ein Verstärkungselement oder ein Dekorelement (z.B. Dekorfolie) oder ein elektronischer Bauteil (z.B. ein Sensor) in den Formhohlraum eingebracht wird, vorzugsweise im Bereich zumindest einer der Formwände des Formwerkzeuges. Als Einlegeteil(e) bzw. Verstärkungselement(e) können auch Halbzeuge, wie Fasern, Gelege, Gewebe, Textilien, thermoplastisch gebundene Hybridgarne/-netze, etc. in den Formhohlraum eingebracht werden. Durch deren Verwendung ist die 'in-situ'-Fertigung schaumgefüllter Tragelemente möglich. Dadurch wird es möglich, Anbau- oder Einlegeteile direkt an den und/oder in dem Formkörper im Zuge seines Aufschäumprozesses zu integrieren, insbesondere daran anzuformen. Weiters kann damit aber auch eine formschlüssige und/oder stoffschlüssige Verbindung bzw. ein Anhaften zwischen dem Einlegeteil und dem Partikelschaummaterial des Formkörpers geschaffen werden. Im Sinne einer durchgehenden Verstärkung sowie einer Anbindung von Deck- zu Bodenlagen kann zudem eine durchgehende Verstärkung des Schaumkernes angestrebt werden, also nicht nur ein Anformen oder Anhaften. Durch diese Ausführungsform der Erfindung erfolgt eine Funktionalisierung des entstehenden Formkörpers.

Eine weitere Ausbildung sieht vor, dass der zumindest eine Einlegeteil an der Formwand positioniert gehalten wird. Dadurch kann während des Einbringens des Granulats sowie dem nachfolgenden Aufschäumvorgang eine eindeutige und dauerhafte Positionierung innerhalb des Formhohlraums sichergestellt werden.

Eine andere Ausführungsform zeichnet sich dadurch aus, dass das Erwärmen des Formwerkzeugs im unmittelbaren Nahbereich zumindest einzelner der den Formhohlraum begrenzenden Formwände durchgeführt wird. Dadurch kann ausgehend von den jeweiligen Formwänden der Werkzeugteile bzw. der Grundplatte und den daran angeordneten oder ausgebildeten Temperiervorrichtungen ein rasches Erwärmen des Granulats sowie ein rasches nachfolgendes Kühlen des daraus hergestellten Formkörpers ermöglicht werden. Weiters kann dadurch aber auch ein umweltfreundlicher Herstellvorgang bereitgestellt werden, da für den Aufschäumprozess kein eigenes Temperiermedium durch den Formhohlraum hindurchzuleiten ist.

Eine weitere bevorzugte Ausführungsform zeichnet sich dadurch aus, dass noch vor dem Schritt des Einbringens des Granulats in den Formhohlraum auf zumindest eine Formwand des Formwerkzeugs eine Schicht, vorzugsweise mittels Pulverbeschichtung oder in Form einer Folie, aufgebracht wird. Dadurch wird es möglich, am Formkörper an selektiven Oberflächenabschnitten eine zusätzliche Beschichtung im Bereich zu einer Oberfläche an diesen ausbilden zu können. Die Schicht kann dabei in flüssiger, pastöser oder fester Form und/oder in Pulverform aufgebracht werden.

Weiters kann es vorteilhaft sein, wenn das Partikelschaummaterial durch Polystyrol, thermoplastisches Polyurethan, expandierfähiges Polypropylen oder thermoplastisches Polybutylenterephthalat gebildet wird. Damit kann eine einfache Anpassung an unterschiedliche Einsatzbedingungen für den jeweils herzustellenden Formkörper geschaffen werden.

Alternativ kann das Partikelschaummaterial teilweise oder zur Gänze aus biobasierten und/oder biologisch abbaubaren bzw. kompostierbaren Bestandteilen bestehen, beispielsweise aus Cellulose-Derivaten (wie z.B. Celluloseester), abbaubaren Kunststoffen und/oder PLA (Polymilchsäure).

In einer bevorzugten Ausführungsform wird das Partikelschaummaterial vor dem Einbringen in das Formwerkzeug mittels sogenannter Druckbeladung mit Treibmittel versehen. Dadurch können auch Materialien verwendet werden, die Treibmittel nur kurz bzw. schlecht halten können (für das Weiterschäumen von teilkristallinen Thermoplasten wichtig).

Bevorzugt ist das Partikelschaummaterial hygroskopisch. Hier zeigt sich ein besonderer Vorteil der Erfindung, die ohne Dampfzufuhr auskommt und daher unerwünschte Veränderungen des Partikelschaummaterials von vornherein unterbindet.

Bevorzugt wird das Formwerkzeug vor dem Schritt (a) vorerwärmt, insbesondere zum Anhaften einer ersten Schüttung des Granulats in Schritt (a).

Vorzugsweise wird das Formwerkzeug während zumindest eines Schrittes des Verfahrens bewegt, vorzugsweise in Rotation versetzt oder oszillierend bewegt. Dadurch kann insbesondere während der Schritte (a) und (b) eine gleichmäßige Schüttung erreicht werden im Inneren des Formhohlraumes erreicht werden.

Es wird bevorzugt, wenn das Verfahren nach dem Schritt (c) einen Schritt (d) des Kühlens des Formwerkzeugs umfasst, wodurch der im Formhohlraum befindliche Formkörper verfestigt wird. Nach dem aktiven Kühlen (z.B. durch ein Kühlmedium) wird die Form geöffnet und anschließend der Formkörper aus dem Formwerkzeug entnommen.

Schließlich sieht eine weitere Ausbildung vor, dass das Formwerkzeug eine Einrichtung zur Erwärmung und/oder Kühlung des Formwerkzeugs, vorzugsweise einen oder mehrere Kanäle einer Temperiervorrichtung für ein Heizmedium und/oder ein Kühlmedium, aufweist und dass der Schritt des Erwärmens des Formwerkzeugs und/oder ein nach dem Schritt des Erwärmens des Formwerkzeugs erfolgender Schritt des Kühlens mittels der Einrichtung zur Erwärmung und/oder Kühlung des Formwerkzeugs durchgeführt wird. Damit kann durch die Kanäle der Temperiervorrichtung entweder ein Heizmedium und/oder ein Kühlmedium hindurchgeleitet werden, ohne dass dieses in direkten Kontakt mit dem im Formhohlraum befindlichen Granulat oder dem bereits hergestellten Formkörper kommt. Weiters kann damit aber auch ein geschlossener Kreislauf gebildet werden, wodurch ein Abströmen an die Umgebung verhindert werden kann.

Vorzugsweise ist die Einrichtung zur Erwärmung und/oder Kühlung innerhalb des Formwerkzeuges integriert und erstreckt sich zumindest ein überwiegender Teil der Einrichtung näher an der Innenwand als an der Außenwand Formwerkzeuges. Dadurch werden Wärmeverluste minimiert und die Energieeffizienz erhöht.

Bevorzugt wird, wenn die Einrichtung zur Erwärmung des Formwerkzeugs zumindest zwei, im Formwerkzeug verlaufende Kanäle umfasst, wobei ein erster Kanal einen ersten Bereich des Formwerkzeuges, vorzugsweise eine erste Wand des Formhohlraumes, erwärmt und ein zweiter Kanal einen zweiten Bereich des Formwerkzeuges, vorzugsweise eine zweite Wand des Formhohlraumes, erwärmt, wobei der erste Kanal unabhängig von dem zweiten Kanal mit einem Heizmedium beaufschlagbar ist bzw. unterschiedlich (z.B. hinsichtlich der Durchflussrate des Heizmediums, der Temperatur des Heizmediums oder des zeitlichen Verlaufes der Beaufschlagung) zu dem zweiten Kanal mit einem Heizmedium beaufschlagt wird. Dadurch können in unterschiedlichen Bereichen des Formwerkzeuges bzw. des Formhohlraumes unterschiedliche Temperaturrampen gefahren werden. Selbstverständlich kann das Werkzeug mehr als zwei unabhängig voneinander regelbare Kanäle aufweisen. Dadurch lassen sich Formteile mit Verbundeigenschaften herstellen, beispielsweise mit unterschiedlicher Härte an gegenüberliegenden Seiten des Formteiles. Die unterschiedliche Beaufschlagung der Kanäle kann durch (vollständig) voneinander getrennte Heizkreise oder jeweils mittels vorgeschalteter regelbarer Ventile erfolgen, mit denen der Durchfluss und somit der Wärmeeintrag (auch in Abhängigkeit der Zeit: Fahren von Temperaturrampen) gezielt geregelt werden kann.

Im Formwerkzeug verlaufende Kanäle zum Erwärmen des Formwerkzeuges - Schritt (c) - können schlangenförmigen Verlauf aufweisen, können aber auch flächig ausgebildet sein, d.h. die Höhe ist wesentlich kleiner als die Erstreckung quer dazu. Die Kanäle können sowohl flächig eben, als auch flächig gekrümmt sein (je nach der Form des Werkzeuges). Insbesondere bei flächigen Kanälen ist bevorzugt, wenn Strukturen in das Innere des Kanals ragen bzw. durch das Innere des Kanals verlaufen, vorzugsweise quer zur Fließrichtung. Die vorzugsweise als Ablenk- bzw. Hindernisstrukturen ausgebildeten Strukturen (z.B. wabenförmige Strukturen) sorgen für eine gleichmäßige Verteilung des Heizmediums und für einen optimierten Wärmeübertrag in die jeweilige Wand des Formhohlraumes.

Eine bevorzugte Ausführungsform zeichnet sich dadurch aus, dass ein Formkörper hergestellt wird, der aus Partikelschaummaterial gebildete Bereiche unterschiedlicher Beschaffenheit aufweist, die vorzugsweise kontinuierlich ineinander übergehen. Bei einem solchen Formkörper handelt es sich um ein einstückiges Werkstück. Die Bereiche unterschiedlicher Beschaffenheit (z.B. unterschiedlicher Dichte, Farbe, Festigkeit, Oberflächenbeschaffenheit, etc.) werden im selben Schäumvorgang gebildet. Durch diese Maßnahme können gezielt Werkstoffe mit gewünschten Eigenschaften hinsichtlich Mechanik, äußeres Erscheinungsbild bzw. Funktionalität im Allgemeinen hergestellt werden.

Eine bevorzugte Ausführungsform zeichnet sich dadurch aus, dass das in den Formhohlraum des Formwerkzeugs eingebrachte Partikelschaummaterial zumindest zwei verschiedene Partikelarten umfasst, wobei sich die Partikelarten vorzugsweise durch Farbe, Größe, Dichte, Treibmittelgehalt, Art des Materials und/oder den Vorschäumgrad voneinander unterscheiden. Die Partikelarten können (homogen) vermischt sein oder räumlich (weitgehend) getrennt in den Formhohlraum eingebracht werden. Durch die Kombination verschiedener Partikelarten lassen sich Funktionalitäten des entstehenden Formkörpers gezielt einstellen.

Eine bevorzugte Ausführungsform zeichnet sich dadurch aus, dass ein erster Bereich des Formhohlraumes, vorzugsweise eine erste Lage, ausschließlich oder überwiegend von einer ersten Partikelart eingenommen wird und dass ein zweiter, vom ersten Bereich unterschiedlicher Bereich des Formhohlraumes, vorzugsweise eine zweite Lage, ausschließlich oder überwiegend von einer zweiten Partikelart, die sich von der ersten Partikelart unterscheidet, eingenommen wird. Hier erfolgt eine räumliche Trennung, zumindest eine inhomogene Anordnung der Partikelarten, sodass im Formkörper Bereiche unterschiedlicher Beschaffenheit entstehen.

Eine bevorzugte Ausführungsform zeichnet sich dadurch aus, dass die verschiedenen Partikelarten nacheinander, vorzugsweise übereinander, in den Formhohlraum eingebracht werden.

Auf diese Weise können durch nacheinander erfolgende Schüttungen Lagen mit verschiedenen Partikelarten hergestellt werden. Der Übergang zwischen den Lagen kann (durch gegenseitiges Eindringen der Partikel in die jeweils andere Lage) kontinuierlich erfolgen.

Eine bevorzugte Ausführungsform zeichnet sich dadurch aus, dass während des Schrittes (c) unterschiedliche Bereiche des Formhohlraumes unterschiedlichen Bedingungen, insbesondere unterschiedlichen Temperaturen und/oder unterschiedlichen Temperaturverläufen ausgesetzt werden. Auch durch diese Maßnahme können im Formkörper Bereiche unterschiedlicher Beschaffenheit hergestellt werden. Unterschiedliche Bedingungen sorgen z.B. dafür, dass der Grad des Schäumens in unterschiedlichen Bereichen unterschiedlich stark ausfällt. Auf diese Weise können insbesondere Dichtegradienten im Formkörper erreicht werden.

Eine bevorzugte Ausführungsform zeichnet sich dadurch aus, dass unterschiedliche, vorzugsweise gegenüberliegende Wände des Formhohlraumes unterschiedlich stark und/oder unterschiedliche lange erwärmt werden. Auf diese Weise können Lagenstrukturen erreicht werden.

Eine weitere bevorzugte Ausführungsform zeichnet sich dadurch aus, dass das Partikelschaummaterial von einer vorzugsweise geschlossenen Hülle, vorzugsweise einem Beutel, umschlossen ist und in Schritt (a) in dem von der Hülle umschlossenen Zustand in den Formhohlraum des Formwerkzeuges eingebracht wird. Der Vorteil dieser Variante besteht insbesondere darin, dass das Partikelschaummaterial nicht in das Formwerkzeug geschüttet werden muss, sondern als kompakte und vordosierte Portion einfach in das Formwerkzeug eingelegt werden kann. Die Hülle bildet gleichzeitig eine Verpackung, die die Lagerung und den Transport des Granulats wesentlich erleichtert. Die Hülle kann dabei aus einem dünnen, folienähnlichen Material, z.B. einem zumindest teilweise durchsichtigen Kunststoffmaterial, gebildet sein, das beim Erwärmen des Formwerkzeuges - Schritt (c) - schmilzt und sich entweder zwischen den Partikeln verteilt oder an der Wand des Formhohlraums anlagert.

In einer bevorzugten Weiterbildung ist das Innere der geschlossenen Hülle evakuiert, d.h. während oder nach dem Verpacken wird zwischen den Partikeln vorhandene Luft aus der Hülle gesaugt. Dadurch erfolgt der Expansionsvorgang im Formwerkzeug auf definierte und reproduzierbare Weise bzw. zerplatzt die Hülle nicht vorzeitig aufgrund einer Gasexpansion.

Das Ziel wird auch erreicht mit einem Formkörper aus einem Partikelschaummaterial, insbesondere hergestellt mit einem erfindungsgemäßen Verfahren, wobei der Formkörper aus Partikelschaummaterial gebildete Bereiche unterschiedlicher Beschaffenheit, vorzugsweise unterschiedlicher Dichte, aufweist, die vorzugsweise kontinuierlich ineinander übergehen. Es handelt sich um einen einstückigen Formkörper, bei dem die Bereiche unterschiedlicher Beschaffenheit zeitlich im selben Schäumprozess gebildet werden. Die Bereiche unterschiedlicher Beschaffenheit sind integral im einstückigen Formkörper ausgebildet.

Zum besseren Verständnis der Erfindung wird diese anhand der nachfolgenden Figuren näher erläutert.

Es zeigen jeweils in stark vereinfachter, schematischer Darstellung:
- Fig. 1: ein Formwerkzeug mit geöffnetem Formhohlraum und darin eingebrachtem Granulat;
- Fig. 2: das Formwerkzeug nach Fig. 1 mit geschlossenem Formhohlraum und dem zum Formkörper verbundenen Granulat, in Ansicht, teilweise geschnitten;
- Fig. 3: ein Zeit- Temperaturdiagramm eines möglichen Fertigungs-Zyklus für den Aufschäum- und Abkühlprozess;
- Fig. 4: eine Ausführungsform eines Formwerkzeuges;
- Fig. 5: einen Formkörper mit Bereichen unterschiedlicher Beschaffenheit;
- Fig. 6: eine weitere Ausführungsform der Erfindung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

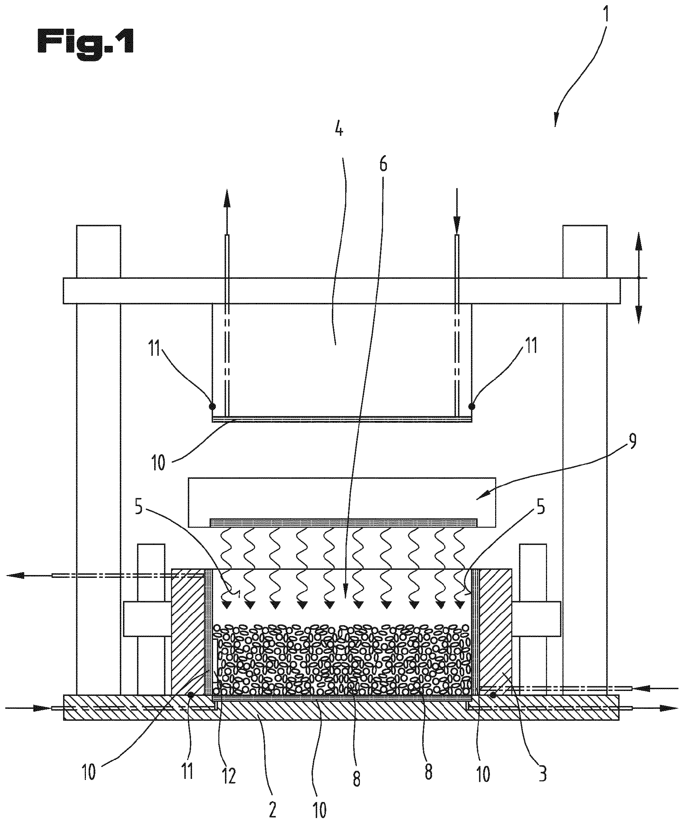

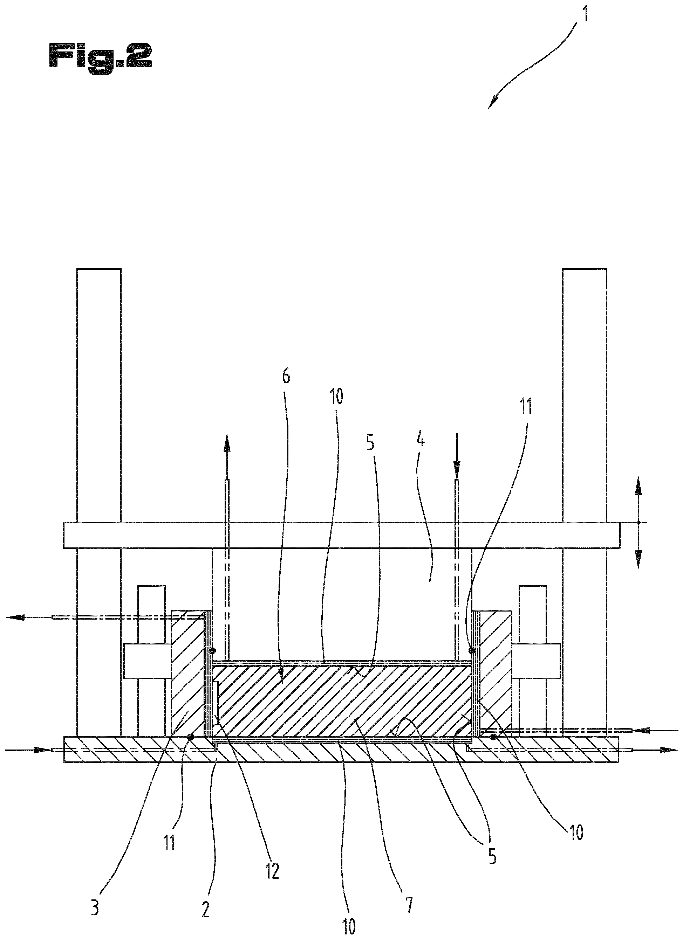

In den Fig. 1 und 2 ist ein Formwerkzeug 1 stark schematisiert dargestellt. Dieses kann aus mehreren Einzelkomponenten gebildet sein. Auf die nähere Darstellung sowie Beschreibung von Führungsvorrichtung sowie Stellvorrichtungen wurde der besseren Übersichtlichkeit halber verzichtet.

Im vorliegenden Ausführungsbeispiel weist das Formwerkzeug 1 eine Basisplatte oder Grundplatte 2, zumindest ein auf der Grundplatte 2 auflagerndes erstes Werkzeugteil 3 sowie zumindest ein relativ dazu verstellbares zweites Werkzeugteil 4 auf. Der erste Werkzeugteil 3 kann z.B. in Form eines umlaufenden Kranzes, gegebenenfalls aus mehreren Einzelkomponenten, ausgebildet sein und einen Aufnahmeschacht ausbilden. Es wären aber auch jegliche andere Ausbildungen der Werkzeugteile 3, 4 möglich, wobei dies von der herzustellenden Raumform abhängig ist.

In der in der Fig. 2 dargestellten Schließstellung des Formwerkzeugs 1 umgrenzen bzw. definieren Formwände 5 desselben einen Formhohlraum 6, in welchem mit einer Schraffur eine mögliche Raumform eines darin ausgebildeten Formkörpers 7 angedeutet ist. Vor dem Schließen des Formwerkzeuges 1 wird im Bereich des Formhohlraumes 6 Partikelschaummaterial, insb. expandierfähiges Kunststoffmaterial, (das auch hygroskopisch sein kann) eingebracht. Bevorzugt werden Formkörper 7 in deren Dicke bzw. Stärke mit geringen Abmessungen ausgebildet. So können bevorzugt plattenförmige Bauteile als Formkörper 7 ausgebildet werden, deren Dicke bzw. Stärke z.B. in einem Wertebereich ausgewählt aus einem Bereich mit einem unteren Wert von ca. 1,0mm und einem oberen Wert von ca. 100mm liegen können. Der Formkörper 7 wird in bekannter Weise aus einem in der Fig. im Formhohlraum 6 schematisch angedeuteten Granulat 8 in Pellets oder Perlenform gebildet. Im Granulat 8 ist ein Treibmittel mit enthalten, welches bis zur Zufuhr einer ausreichenden Wärmemenge und/oder einer entsprechenden Temperatur keinerlei Wirkung für den Aufschäumprozess hat. Das Granulat 8 kann aus einem expansionsfähigen Kunststoffmaterial in Granulatform ausgebildet sein.

So kann z.B. das in den Formhohlraum 6 eingebrachte Granulat 8 durch ein noch nicht vorgeschäumtes Partikelschaummaterial, welches üblicherweise als Mikrogranulat bezeichnet wird, gebildet sein. Ist dies der Fall, kann das in den Formhohlraum 6 eingebrachte, noch nicht vorgeschäumte Partikelschaummaterial, insbesondere das Mikrogranulat, direkt im Formhohlraum 6 vorgeschäumt werden. Dazu kann, wie dies in der Fig. 1 vereinfacht dargestellt ist, ein Heizelement 9 vorgesehen werden. Das Heizelement 9 kann insbesondere als sogenannter IR-Strahler ausgebildet sein. Die Abkürzung IR steht für Infrarot, wobei diese Strahlung die bekannten Frequenzbereiche zwischen 300 GHz und 400 THz aufweisen kann. Durch diese Schwingungen werden Moleküle zu Schwingungen und Rotationen angeregt. Der IR-Strahler des Heizelements 9 erzeugt eine Wärmestrahlung, welche durch gewellt verlaufende Pfeile angedeutet ist. Das im Kunststoffwerkstoff enthaltene Treibmittel beginnt bei Erreichen einer für dieses vorbestimmten Temperatur das Partikelschaummaterial vorzuschäumen oder sogar einen gewissen Anteil aufzuschäumen. Damit ist eine Volumenvergrößerung des Mikrogranulats verbunden.

Das Heizelement 9 wird bei Erreichen eines ausreichenden Vorschäumzustandes des Mikrogranulats aus dem Bereich des Formwerkzeugs 1 weg verstellt und es kann der Formhohlraum 6 mittels der Werkzeugteile 3, 4 geschlossen werden.

Es wäre aber auch noch möglich, dass das in den Formhohlraum 6 eingebrachte Granulat 8 bereits aus einem zuvor zumeist in einem eigenen Arbeitsschritt vorgeschäumten Mikrogranulat gebildet wird. Damit könnte der zuvor beschriebene Vorschäumvorgang im Formhohlraum 6 entfallen. So könnte auf das Anordnen und Vorsehen des Heizelements 9 (IR-Strahler) gegebenenfalls verzichtet werden.

Unabhängig davon oder zusätzlich dazu könnte aber auch dem bereits vorgeschäumten Mikrogranulat, welches im Formhohlraum 6 aufgenommen ist, auch noch vor dem Schließen des Formhohlraums 6 mittels des Heizelements 9 (IR-Strahler) Wärmeenergie zugeführt werden. Dies kann als Vorwärmvorgang bezeichnet werden und könnte mittels des Heizelements 9 (IR-Strahler) erfolgen.

Weiters könnte vor dem Schritt des Einbringens des Granulats 8 in den Formhohlraum 6 das Granulat 8 getrocknet werden. Damit kann ein zu hoher Feuchtegehalt im Formhohlraum 6 bei der Herstellung des Formkörpers 7 verhindert werden.

Bevorzugt wird das expansionsfähige Kunststoffmaterial ausschließlich aus dem Granulat 8 gebildet. Es könnten aber auch noch Zusätze und/oder Fasermaterialien und/oder Fadenmaterialien in den unterschiedlichsten Werkstoffen sowie Mengenanteilen dem Granulat 8 zur Einbettung im Zuge des Aufschäumvorganges zugemischt werden.

Zumeist erfolgt zuerst ein reines mechanisches Verschließen des Formhohlraums 6, um dem durch das aufschäumende Partikelschaummaterial im Formhohlraum 6 aufgebauten Schäumdruck stand zu halten, damit die festgelegte Raumform des Formkörper 7 ausgebildet werden kann.

Weiters ist hier noch vorgesehen, dass das Aufschäumen des Granulats 8 ausschließlich durch Wärmeeinbringung ausgehend vom Formwerkzeug 1, insbesondere von dessen Formwände 5 aus, erfolgt. Mittels der eingebrachten Wärmeenergie wird das Granulat 8 von dem darin enthaltenen Treibmittel aufgeschäumt und dabei der Formkörper 7 in seiner Raumform durch die Geometrie des Formhohlraums 6 ausgebildet, wie die allgemein bekannt ist.

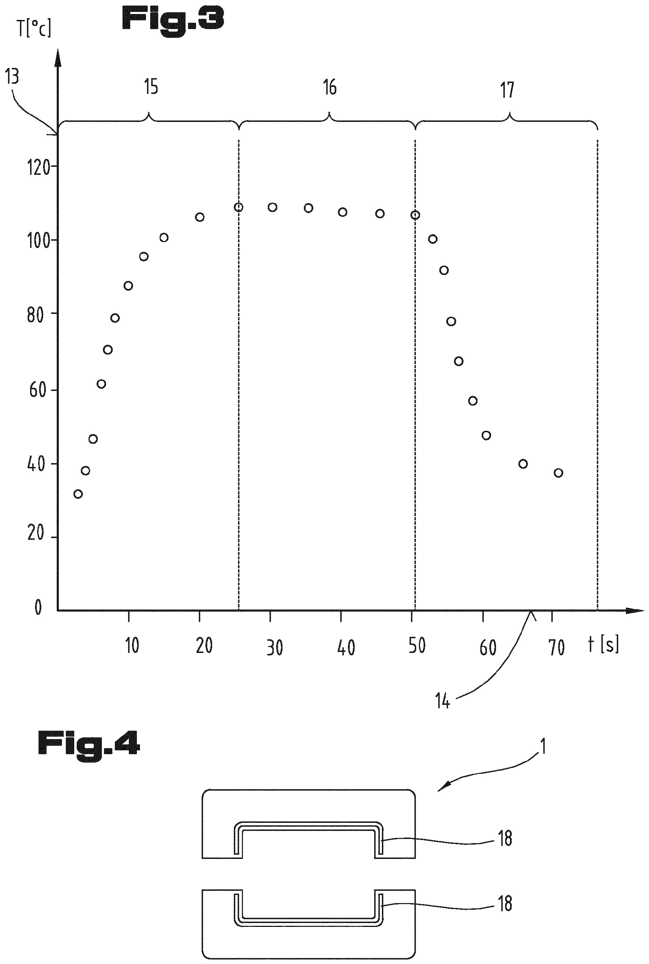

Das Erwärmen des Formwerkzeugs 1, insbesondere jener dem Formhohlraum 6 zugewendeten Formwände 5, erfolgt direkt im Bereich der Formwände 5 selbst. Dazu können im Nahbereich der Formwände 5 in den Werkzeugteilen 3, 4 schematisch durch Striche angedeutete Kanäle angeordnet oder ausgebildet sein, welche eine Temperiervorrichtung 10 ausbilden. Die Kanäle bzw. die durch diese gebildete Temperiervorrichtung 10 kann auch noch als Einrichtung 18 zur Erwärmung und/oder Kühlung des Formwerkzeugs 1 bezeichnet werden (siehe auch Fig. 4). Die Zu- sowie Ableitungen in sowie aus den jeweils die Temperiervorrichtung 10 bildenden Kanälen sind schematisch durch strich-punktierte Linien angedeutet. Zumindest die Herstellung der Kanäle am oder im jeweiligen der Werkzeugteile 3, 4 und/oder der Grundplatte 2 kann z.B. generativ erfolgen. Dazu kann ein additives Fertigungsverfahren, wie z.B. ein 3D-Druck, selektives Laserschmelzen oder Lasersintern, Elektronenstrahlschmelzen oder dgl. eingesetzt werden. So kann die Anordnung und Ausbildung der Kanäle sehr oberflächennah bezüglich der Formwände 5 erfolgen, wodurch ein rascher Wärmeübergang von einem durch die Kanäle hindurchströmenden Medium an den Formhohlraum 6 oder von dem im Formhohlraum 6 angeordneten Formkörper 7 an das durch die Kanäle hindurchströmenden Medium erfolgen kann. Damit kann das Erwärmen des Formwerkzeugs 1 im unmittelbaren Nahbereich zumindest einzelner der den Formhohlraum 6 begrenzenden Formwände 5 durchgeführt werden.

Wird durch die Kanäle der Temperiervorrichtung 10 ein Heizmedium, wie z.B. Wasserdampf, Öl oder ein anderes flüssiges und/oder gasförmiges Medium, hindurchgeleitet, wird die zugeführte Wärmeenergie rasch an das aufzuschäumende Granulat 8 im Formhohlraum 6 weitergeleitet bzw. abgegeben.

Soll der hergestellte Formkörper 7 für dessen Entnahme aus dem Formhohlraum 6 abgekühlt und damit verfestigt werden, ist ein entsprechendes Kühlmedium, wie z.B. Wasser, Öl oder dergleichen, durch die gleichen Kanäle der Temperiervorrichtung 10 hindurch zu leiten. Damit kann eine Wärmeabfuhr und damit verbundenen Kühlung sowohl des Formhohlraums 6 als auch des darin befindlichen Formkörpers 7 erfolgen.

Ist der Formkörper 7 soweit abgekühlt, dass dieser für die Entnahme formstabil ist, kann der Formhohlraum 6 des Formwerkzeugs 1 geöffnet werden, um den Formkörper 7 entfernen oder entnehmen zu können.

Um einen unkontrollierten Zutritt sowie auch einen Austritt von Flüssigkeiten und/oder Gasen in und/oder aus dem Formhohlraum 6 während des Aufschäumprozesses zu verhindern, ist der Formhohlraum 6 vor dem Schritt des Erwärmens des Formwerkzeugs zumindest flüssigkeitsdicht gegenüber den Kanälen der Temperiervorrichtung 10 sowie der äußeren Umgebung zu verschließen. Dazu können zwischen den Werkzeugteilen 3, 4 sowie der Grundplatte 2 vereinfacht dargestellte Dichtelemente 11 vorgesehen werden. Damit kann auch ein gasdichter Abschluss des Formhohlraums 6 erzielt werden.

Weiters ist noch im linken Teil des Formhohlraums 6 angedeutet, dass im Bereich zumindest einer der Formwände 5 zumindest ein Einlegeteil 12 in den Formhohlraum 6 eingebracht sein kann. Das Einbringen erfolgt bevorzugt noch vor dem Schritt des Einbringens des Granulats 8 in den Formhohlraum 6. Der oder die Einlegeteile 12 können sehr oberflächennah am Formkörper 7 angeordnet sein und/oder auch selbst einen Teilabschnitt seiner äußeren Oberfläche ausbilden. Dazu kann der zumindest eine Einlegeteil 12 an der Formwand 5 positioniert gehalten werden. Dies kann durch die unterschiedlichsten Positioniermittel oder Haltemittel erfolgen, wie diese aus dem Stand der Technik bereits bekannt sind.

Der oder die Einlegeteile 12 können aus den verschiedensten Werkstoffen, insbesondere Metallen, Kunststoffen oder natürlichen Werkstoffen, sowie auch in den unterschiedlichsten Raumformen ausgebildet sein. Weiters wäre es aber auch noch möglich, das Granulat 8 zur

Ausbildung des Formkörpers 7 in zueinander unterschiedlichen Farben und/oder Werkstoffen und/oder mit unterschiedlichen Dichtewerten einzusetzen. Damit können unter anderem optische Gestaltungen des Formkörpers 7 erzielt werden. Weiters lassen sich auch Dichtevariationen innerhalb des Formkörpers 7 erzielen. Als Einlegeteil 12 könnten auch Gewebe, Gewirke oder Geflechte Verwendung finden. Es könnten aber auch Befestigungselemente als Einlegeteile 12 mit in den Formkörper 7 eingebettet oder angeformt werden.

Weiters wäre es noch möglich, dass noch vor dem Schritt des Einbringens des Granulats 8 in den Formhohlraum 6 auf zumindest eine der Formwände 5 des Formwerkzeugs 1 eine nicht näher dargestellte Schicht, vorzugsweise mittels Pulverbeschichtung, aufgebracht wird.

Als Werkstoff für das Partikelschaummaterial, insb. expansionsfähige Kunststoffmaterial, kann dieser aus der Gruppe von Polystyrol, thermoplastisches Polyurethan, expandierfähiges Polypropylen oder thermoplastisches Polybutylenterephthalat ausgewählt sein.

In der Fig. 3 ist ein möglicher Temperaturverlauf für den Aufschäumprozess und die nachfolgende Abkühlung in Abhängigkeit von der dafür benötigten Zeit in einem Diagramm für das Formwerkzeug 1, insbesondere der Formwände 5, dargestellt. Die Temperaturangaben beziehen sich dabei auf die Temperatur im Formwerkzeug 1.

Auf einer Ordinate 13 ist die Temperatur in °Celsius [°C] und auf einer Abszisse 14 die Zeit in Sekunden [s] dargestellt. Das Aufheizen und somit die Wärmezufuhr mittels der Temperiervorrichtungen 10 erfolgt bei diesem Beispiel in etwa über eine Zeitdauer von 25s. Die Temperatur nimmt dabei bis zu einem Wert von ca. 110°C zu. Dieser erste Schritt des Aufheizens ist als erster Abschnitt mit dem Bezugszeichen 15 bezeichnet worden.

In einem darauf folgenden zweiten Abschnitt 16 erfolgt ein Halten in etwa in einem Temperaturbereich zwischen 110°C und 105°C über eine weitere Zeitdauer von ca. 25s. Ab einer bisherigen Gesamt-Zeitdauer von ca. 50s beginnt dann ein dritter Abschnitt 17, der ebenfalls eine weitere Zeitdauer von in etwa 25s in Anspruch nimmt und die Abkühlung der Formwände 5 und damit verbunden des Formkörpers 7 betrifft. Anschließend kann der abgekühlte Formkörper 7 nach dem Öffnen des Formhohlraums 6 aus diesem entnommen werden.

Fig. 4 zeigt eine Ausführungsform eines Formwerkzeuges 1, bei dem die Einrichtung 18 zur Erwärmung und/oder Kühlung innerhalb des Formwerkzeuges 1 integriert ist. Die Einrichtung 18 wird hier durch in der Wand des Formwerkzeuges 1 verlaufende Heiz-/Kühlkanäle für ein Medium gebildet. Wie aus Fig. 4 zu sehen ist, erstreckt sich zumindest ein überwiegender Teil der Einrichtung 18 (Kanäle) näher an der Innenwand als an der Außenwand des Formwerkzeuges 1. Dadurch werden Wärmeverluste minimiert und die Energieeffizienz erhöht.

Im Folgenden werden bevorzugte Ausführungsformen des Verfahrens dargestellt:
Es handelt sich bei der Offenbarung um ein Verfahren zur Herstellung eines Formkörpers 7 aus einem Partikelschaummaterial in einem verschließbaren Formhohlraum 6 eines Formwerkzeugs 1, umfassend die Schritte:
(a) Einbringen des Partikelschaummaterials in Form eines Granulates 8 in den Formhohlraum 6 des Formwerkzeugs 1,
(b) Verschließen des Formhohlraums 6,
(c) Erwärmen des Formwerkzeugs 1 und des darin enthaltenen Granulats 8, wodurch die Partikeln des Granulats 8 miteinander verbunden werden.

Während des Schrittes (c) erfolgt die Einbringung der Wärmeenergie in das Innere des Formhohlraums 6 ausschließlich durch die Wand des Formhohlraumes 6 hindurch, wobei der Übergang der Wärmeenergie von der Wand des Formhohlraumes 6 in das Innere des Formhohlraumes 6 konvektionsfrei, vorzugsweise durch Wärmeleitung und/oder Wärmestrahlung, erfolgt.

In dem in Schritt (a) in den Formhohlraum 6 eingebrachten Granulat 8 kann ein Treibmittel enthalten sein. Alternativ kann ein Treibmittel gesondert vom Granulat 8 in den Formhohlraum 6 eingebracht werden, wodurch das Granulat 8 im Schritt (c) mittels der eingebrachten Wärmeenergie expandiert und dabei der Formkörper 7 in seiner Raumform durch die Geometrie des Formhohlraums 6 ausgebildet wird.

Das Formwerkzeug 1 kann vor dem Schritt (a) vorerwärmt werden, insbesondere zum Anhaften einer ersten Schüttung des Granulats 8 in Schritt (a).

Das Formwerkzeug 1 kann während zumindest eines Schrittes des Verfahrens bewegt, vorzugsweise in Rotation versetzt oder oszillierend bewegt werden.

Das Verfahren kann nach dem Schritt (c) einen Schritt (d) des Kühlens des Formwerkzeugs 1 umfassen, wodurch der im Formhohlraum 6 befindliche Formkörper 7 verfestigt wird.

Es wird bevorzugt, wenn das Formwerkzeug 1 aus einem ersten Werkzeugteil 3 und einem zweiten Werkzeugteil 4, das vom ersten Werkzeugteil 3 abnehmbar ist, gebildet wird, wobei vorzugsweise das erste Werkzeugteil 3 eine Aufnahme für das Partikelschaummaterial bildet und das zweite Werkzeugteil 4 einen Deckel oder einen Stempel zum Verschließen der Aufnahme bildet.

Es ist auch möglich, dass nach dem Verschließen des Formhohlraumes 6 das in dem Formhohlraum 6 eingebrachte Partikelschaummaterial durch das Formwerkzeug 1 zusammengepresst wird, vorzugsweise vor und/oder während des Schrittes (c).

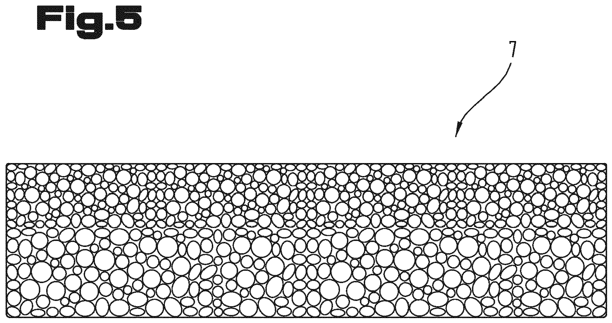

Fig. 5 zeigt eine bevorzugte Ausführungsform, bei der ein Formkörper 7 hergestellt wurde, der aus Partikelschaummaterial gebildete Bereiche unterschiedlicher Beschaffenheit aufweist. Der obere Bereich weist eine höhere Dichte auf als der untere Bereich des Formkörpers 7. Eine solche Struktur kann dadurch erreicht werden, dass das in den Formhohlraum 6 des Formwerkzeugs 1 eingebrachte Partikelschaummaterial - Schritt (a) - zumindest zwei verschiedene Partikelarten um-fasst, wobei sich die Partikelarten vorzugsweise durch Farbe, Größe, Dichte, Treibmittelgehalt, Art des Materials und/oder den Vorschäumgrad voneinander unterscheiden.

Dabei kann ein erster Bereich des Formhohlraumes 6, vorzugsweise eine erste Lage, ausschließlich oder überwiegend von einer ersten Partikelart eingenommen werden und ein zweiter, vom ersten Bereich unterschiedlicher Bereich des Formhohlraumes 6, vorzugsweise eine zweite Lage, ausschließlich oder überwiegend von einer zweiten Partikelart, die sich von der ersten Partikelart unterscheidet, eingenommen werden. Selbstverständlich können zusätzlich auch weitere Bereiche mit weiteren Partikelarten vorgesehen sein.

Die verschiedenen Partikelarten können nacheinander, vorzugsweise übereinander, in den Formhohlraum 6 eingebracht werden.

In einer anderen Variante können während des Schrittes (c) unterschiedliche Bereiche des Formhohlraumes 6 unterschiedlichen Bedingungen, insbesondere unterschiedlichen Temperaturen und/oder unterschiedlichen Temperaturverläufen ausgesetzt werden. So könnte der untere Bereich aus Fig. 5 höheren Temperaturen und/oder längerer Erwärmung ausgesetzt worden sein als der obere (dichtere) Bereich. Dabei können unterschiedliche, vorzugsweise gegenüberliegende Wände des Formhohlraumes 6 unterschiedlich stark und/oder unterschiedliche lange erwärmt werden.

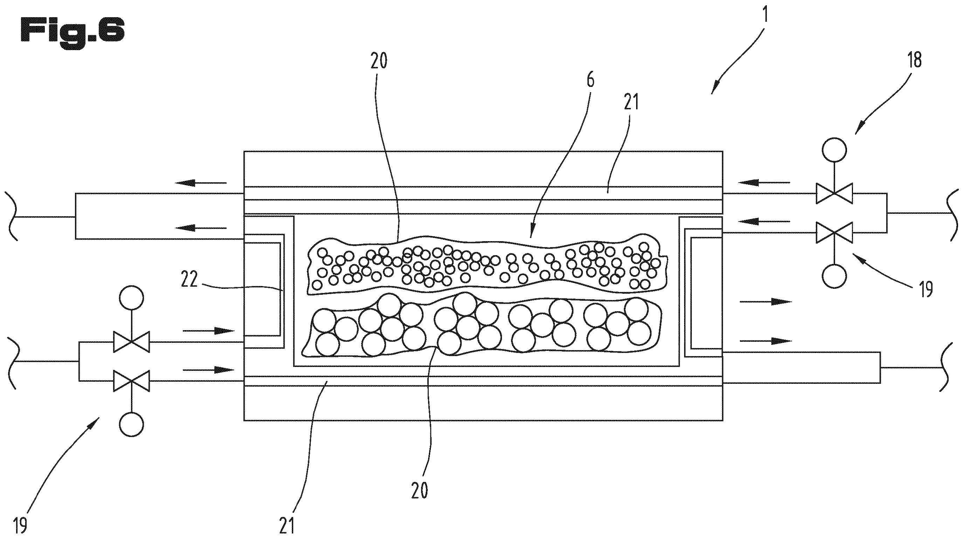

Fig. 6 zeigt eine weitere Variante, bei der die Einrichtung 18 zur Erwärmung des Formwerkzeugs 1 im Formwerkzeug 1 verlaufende Kanäle 21, 22 umfasst, die jeweils unterschiedliche Bereiche des Formwerkzeuges 1 (hier: unterschiedliche Wände des Formhohlraumes 6) erwärmen. Die ersten und zweiten Kanäle 21, 22 werden unabhängig voneinander mit einem

Heizmedium beaufschlagt. Dadurch kann der Schäumvorgang (Expansion der Partikel) an unterschiedlichen Stellen des entstehenden Formkörpers unterschiedlich stark erfolgen, d.h. es können lokale Unterschiede im entstehenden Formteil gezielt herbeigeführt werden. Die Unterschiedliche Beaufschlagung der Heizkanäle 21, 22 mit einem Heizmedium kann wie dargestellt mittels regelbarer Ventile 19 erfolgen. Alternativ könnte für jeden unabhängigen Kanal ein eigener Heizkreis vorgesehen sein.

Fig. 6 zeigt, dass - alternativ oder zusätzlich zu der inhomogenen Erwärmung des Formwerkzeuges 1 - verschiedene Partikelarten (hier: größere Partikel unten, kleinere Partikel oben) in den Formhohlraum 6 eingebracht werden können. Dadurch erhält die Oberseite des Formteiles andere (mechanische) Eigenschaften als die Unterseite des Formteils.

Fig. 6 zeigt auch noch einen weiteren Aspekt der Offenbarung, bei dem das Partikelschaummaterial von einer vorzugsweise geschlossenen Hülle, vorzugsweise einem Beutel, umschlossen ist und in Schritt (a) in dem von der Hülle umschlossenen Zustand in den Formhohlraum 6 des Formwerkzeuges 1 eingebracht wird. Das Partikelschaummaterial muss hier nicht in das Formwerkzeug geschüttet werden, sondern kann als kompakte und vordosierte Portion einfach in das Formwerkzeug 1 eingelegt werden kann. Die Hülle kann dabei aus einem dünnen, folienähnlichen Material, z.B. einem zumindest teilweise durchsichtigen Kunststoffmaterial, gebildet sein, das beim Erwärmen des Formwerkzeuges - Schritt (c) - schmilzt und sich entweder zwischen den Partikeln verteilt oder an der Wand des Formhohlraums anlagert. Die Variante eines umhüllten Granulats kann selbstverständlich auch bei Verwendung nur einer Partikelart zur Anwendung kommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Formwerkzeug
- 2: Grundplatte
- 3: erstes Werkzeugteil
- 4: zweites Werkzeugteil
- 5: Formwand
- 6: Formhohlraum
- 7: Formkörper
- 8: Granulat
- 9: Heizelement
- 10: Temperiervorrichtung
- 11: Dichtelement
- 12: Einlegeteil
- 13: Ordinate
- 14: Abszisse
- 15: erster Abschnitt
- 16: zweiter Abschnitt
- 17: dritter Abschnitt
- 18: Einrichtung zur Erwärmung und/oder Kühlung des Formwerkzeugs 1
- 19: Ventil
- 20: Hülle
- 21: erster Kanal
- 22: zweiter Kanal

## Patentansprüche

1. Verfahren zur Herstellung eines Formkörpers (7) aus einem Partikelschaummaterial in einem verschließbaren Formhohlraum (6) eines Formwerkzeugs (1), umfassend die Schritte:
(a) Einbringen des Partikelschaummaterials in Form eines Granulates (8) in den Formhohlraum (6) des Formwerkzeugs (1),
(b) Verschließen des Formhohlraums (6),
(c) Erwärmen des Formwerkzeugs (1) und des darin enthaltenen Granulats (8), wodurch die Partikeln des Granulats (8) miteinander verbunden werden,
wobei
während des Schrittes (c) die Einbringung der Wärmeenergie in das Innere des Formhohlraums (6) ausschließlich durch die Wand des Formhohlraumes (6) hindurch erfolgt, wobei der Übergang der Wärmeenergie von der Wand des Formhohlraumes (6) in das Innere des Formhohlraumes (6) konvektionsfrei erfolgt,
**dadurch gekennzeichnet, dass** das Formwerkzeug (1) eine Einrichtung (18) zur Erwärmung des Formwerkzeugs (1) in Form eines oder mehrerer Kanäle einer Temperiervorrichtung (10) für ein Heizmedium aufweist und Schritt (c) mittels der Einrichtung (18) zur Erwärmung des Formwerkzeugs (1) durchgeführt wird.

2. Verfahren nach Anspruch 1, **dadurch gekennzeichnet, dass** der zumindest eine Kanal in einer Wand des Formwerkzeuges (1) verläuft und im Schritt (c) die Wärme mittels eines Heizmediums, das durch den Kanal geleitet wird, in das Formwerkzeug (1) eingebracht wird und zwischen Kanal und Innenwand des Formhohlraumes (6) durch Wärmeleitung übertragen wird, wobei das Formwerkzeug (1) - zumindest im Bereich zwischen dem zumindest einen Kanal und der Innenwand des Formhohlraumes (6) - aus Metall gebildet ist.

3. Verfahren nach Anspruch 1 oder 2, **dadurch gekennzeichnet, dass** vor dem Schritt (c) des Erwärmens des Formwerkzeugs (1) der Formhohlraum (6) zumindest flüssigkeitsdicht, vorzugsweise dampfdicht und/oder gasdicht verschlossen wird.

4. Verfahren nach einem der vorhergehenden Ansprüche, **dadurch gekennzeichnet, dass** in dem in Schritt (a) in den Formhohlraum (6) eingebrachten Granulat (8) ein Treibmittel enthalten ist oder dass ein Treibmittel gesondert vom Granulat (8) in den Formhohlraum (6) eingebracht wird, wodurch das Granulat (8) im Schritt (c) mittels der eingebrachten Wärmeenergie expandiert und dabei der Formkörper (7) in seiner Raumform durch die Geometrie des Formhohlraums (6) ausgebildet wird.

5. Verfahren nach einem der vorhergehenden Ansprüche, **dadurch gekennzeichnet, dass** das in den Formhohlraum (6) eingebrachte Granulat (8) durch ein noch nicht vorgeschäumtes Mikrogranulat gebildet wird.

6. Verfahren nach Anspruch 5, **dadurch gekennzeichnet, dass** das in den Formhohlraum (6) eingebrachte, noch nicht vorgeschäumte Mikrogranulat direkt im Formhohlraum (6) vorgeschäumt wird, wobei vorzugsweise das Vorschäumen des Mikrogranulats mittels eines IR-Strahlers durchgeführt wird.

7. Verfahren nach einem der Ansprüche 1 bis 4, **dadurch gekennzeichnet, dass** das in den Formhohlraum (6) eingebrachte Granulat (8) aus einem zumindest teilweise vorgeschäumten Mikrogranulat gebildet wird.

8. Verfahren nach einem der vorhergehenden Ansprüche, **dadurch gekennzeichnet, dass** das in den Formhohlraum (6) eingebrachte Granulat (8) mittels eines IR-Strahlers vorerwärmt wird.

9. Verfahren nach einem der vorhergehenden Ansprüche, **dadurch gekennzeichnet, dass** vor dem Schritt (a) des Einbringens des Granulats (8) in den Formhohlraum (6) das Granulat (8) getrocknet wird.

10. Verfahren nach einem der vorhergehenden Ansprüche, **dadurch gekennzeichnet, dass** das in den Formhohlraum (6) eingebrachte Partikelschaummaterial ausschließlich aus dem Granulat (8) gebildet wird.

11. Verfahren nach einem der vorhergehenden Ansprüche, **dadurch gekennzeichnet, dass** vor dem Schritt (b), zumindest ein Einlegeteil (12) in den Formhohlraum (6) eingebracht wird.

12. Verfahren nach Anspruch 11, **dadurch gekennzeichnet, dass** der zumindest eine Einlegeteil (12) an einer Formwand (5) des Formwerkzeuges (1) positioniert gehalten wird.

13. Verfahren nach einem der vorhergehenden Ansprüche, **dadurch gekennzeichnet, dass** das Erwärmen des Formwerkzeugs (1) im unmittelbaren Nahbereich zumindest einzelner der den Formhohlraum (6) begrenzenden Formwände (5) durchgeführt wird.

14. Verfahren nach einem der vorhergehenden Ansprüche, **dadurch gekennzeichnet, dass** noch vor dem Schritt (a) des Einbringens des Granulats (8) in den Formhohlraum (6) auf zumindest eine Formwand (5) des Formwerkzeugs (1) eine Schicht aufgebracht wird.

15. Verfahren nach einem der vorhergehenden Ansprüche, **dadurch gekennzeichnet, dass** das Partikelschaummaterial durch Polystyrol, thermoplastisches Polyurethan, expandierfähiges Polypropylen oder thermoplastisches Polybutylenterephthalat gebildet wird.

16. Verfahren nach einem der vorhergehenden Ansprüche, **dadurch gekennzeichnet, dass** das Partikelschaummaterial hygroskopisch ist.

17. Verfahren nach einem der vorhergehenden Ansprüche, **dadurch gekennzeichnet, dass** das Formwerkzeug (1) vor dem Schritt (a) vorerwärmt wird.

18. Verfahren nach einem der vorhergehenden Ansprüche, **dadurch gekennzeichnet, dass** das Formwerkzeug (1) während zumindest eines Schrittes des Verfahrens bewegt, vorzugsweise in Rotation versetzt oder oszillierend bewegt wird.

19. Verfahren nach einem der vorhergehenden Ansprüche, **dadurch gekennzeichnet, dass** das Verfahren nach dem Schritt (c) einen Schritt (d) des Kühlens des Formwerkzeugs (1) umfasst, wodurch der im Formhohlraum (6) befindliche Formkörper (7) verfestigt wird.

20. Verfahren nach einem der vorhergehenden Ansprüche, **dadurch gekennzeichnet, dass** das Formwerkzeug (1) eine Einrichtung (18) zur Erwärmung und/oder Kühlung des Formwerkzeugs (1) aufweist und dass Schritt (c) und/oder ein nach dem Schritt (c) erfolgender Schritt (d) des Kühlens mittels der Einrichtung (18) zur Erwärmung und/oder Kühlung des Formwerkzeugs (1) durchgeführt wird.

21. Verfahren nach Anspruch 20, **dadurch gekennzeichnet, dass** die Einrichtung (18) zur Erwärmung und/oder Kühlung innerhalb des Formwerkzeuges (1) integriert ist und sich zumindest ein überwiegender Teil der Einrichtung (18) näher an der Innenwand als an der Außenwand Formwerkzeuges (1) erstreckt.

22. Verfahren nach Anspruch 20 oder 21, **dadurch gekennzeichnet, dass** die Einrichtung (18) zur Erwärmung des Formwerkzeugs (1) zumindest zwei, im Formwerkzeug (1) verlaufende Kanäle (21, 22) umfasst, wobei ein erster Kanal (21) einen ersten Bereich des Formwerkzeuges (1) erwärmt und ein zweiter Kanal (22) einen zweiten Bereich des Formwerkzeuges (1) erwärmt, wobei der erste Kanal (21) unterschiedlich zu dem zweiten Kanal (22) mit einem Heizmedium beaufschlagt wird.

23. Verfahren nach einem der vorhergehenden Ansprüche, **dadurch gekennzeichnet, dass** das Formwerkzeug (1) aus einem ersten Werkzeugteil (3) und einem zweiten Werkzeugteil (4), das vom ersten Werkzeugteil (3) abnehmbar ist, gebildet wird.

24. Verfahren nach einem der vorhergehenden Ansprüche, **dadurch gekennzeichnet, dass** nach dem Verschließen des Formhohlraumes (6) das in dem Formhohlraum (6) eingebrachte Partikelschaummaterial durch das Formwerkzeug (1) zusammengepresst wird.

25. Verfahren nach einem der vorhergehenden Ansprüche, **dadurch gekennzeichnet, dass** ein Formkörper (7) hergestellt wird, der aus Partikelschaummaterial gebildete Bereiche unterschiedlicher Beschaffenheit aufweist.

26. Verfahren nach einem der vorhergehenden Ansprüche, **dadurch gekennzeichnet, dass** das in den Formhohlraum (6) des Formwerkzeugs (1) eingebrachte Partikelschaummaterial zumindest zwei verschiedene Partikelarten umfasst.

27. Verfahren nach Anspruch 26, **dadurch gekennzeichnet, dass** ein erster Bereich des Formhohlraumes (6), vorzugsweise eine erste Lage, ausschließlich oder überwiegend von einer ersten Partikelart eingenommen wird und dass ein zweiter, vom ersten Bereich unterschiedlicher Bereich des Formhohlraumes (6) ausschließlich oder überwiegend von einer zweiten Partikelart, die sich von der ersten Partikelart unterscheidet, eingenommen wird.

28. Verfahren nach Anspruch 26 oder 27, **dadurch gekennzeichnet, dass** die verschiedenen Partikelarten nacheinander in den Formhohlraum (6) eingebracht werden.

29. Verfahren nach einem der vorhergehenden Ansprüche, **dadurch gekennzeichnet, dass** während des Schrittes (c) unterschiedliche Bereiche des Formhohlraumes (6) unterschiedlichen Bedingungen ausgesetzt werden.

30. Verfahren nach Anspruch 29, **dadurch gekennzeichnet, dass** unterschiedliche Wände des Formhohlraumes (6) unterschiedlich stark und/oder unterschiedliche lange erwärmt werden.

31. Verfahren nach einem der vorhergehenden Ansprüche, **dadurch gekennzeichnet, dass** das Partikelschaummaterial von einer Hülle umschlossen ist und in Schritt (a) in dem von der Hülle umschlossenen Zustand in den Formhohlraum (6) des Formwerkzeuges (1) eingebracht wird.

## Claims

1. A method for producing a molded body (7) from a particle foam material in a closable mold cavity (6) of a molding tool (1), comprising the steps:
(a) introducing the particle foam material in the form of granulate material (8) into the mold cavity (6) of the molding tool (1),
(b) closing the mold cavity (6),
(c) heating the molding tool (1) and the granulate material (8) contained therein, whereby the particles of the granulate material (8) are bonded to one another,
wherein
during step (c), the introduction of the thermal energy into the interior of the mold cavity (6) takes place exclusively through the wall of the mold cavity (6), wherein the passage of the heat energy from the wall of the mold cavity (6) into the interior of the mold cavity (6) takes place free of convection,
**characterized in that** the molding tool (1) has a device (18) for heating the molding tool (1), in the form of one or multiple channels of a temperature control device (10) for a heating medium, and step (c) is carried out by means of the device (18) for heating the molding tool (1).

2. The method according to claim 1, **characterized in that** the at least one channel extends in a wall of the molding tool (1), and in step (c), the heat is introduced into the molding tool (1) by means of a heating medium, which is conducted through the channel, and is transferred between channel and inner wall of the mold cavity (6) by means of thermal conduction, wherein the molding tool (1) is made of metal - at least in the region between the at least one channel and the inner wall of the mold cavity (6).

3. The method according to claim 1 or 2, **characterized in that** prior to step (c) of heating the molding tool (1), the mold cavity (6) is closed so as to be liquid-tight, preferably vapor-tight and/or gas-tight.

4. The method according to one of the preceding claims, **characterized in that** a blowing agent is contained in the granulate material (8) introduced into the mold cavity (6) in step (a), or that a blowing agent is introduced into the mold cavity (6) separately from the granulate material (8), whereby the granulate material (8) expands in step (c) due to the thermal energy introduced, and in this process, the molded body (7) in its spatial shape is formed by the geometry of the mold cavity (6).

5. The method according to one of the preceding claims, **characterized in that** the granulate material (8) introduced into the mold cavity (6) is formed by a micro granulate material not yet prefoamed.

6. The method according to claim 5, **characterized in that** the micro granulate material not yet prefoamed introduced into the mold cavity (6) is prefoamed directly in the mold cavity (6), wherein the prefoaming of the micro granulate material is preferably carried out by means of an IR heater.

7. The method according to one of the claims 1 to 4, **characterized in that** the granulate material (8) introduced into the mold cavity (6) is formed by an at least partially prefoamed micro granulate material.

8. The method according to one of the preceding claims, **characterized in that** the granulate material (8) introduced into the mold cavity (6) is preheated by means of an IR heater.

9. The method according to one of the preceding claims, **characterized in that** prior to step (a) of introducing the granulate material (8) into the mold cavity (6), the granulate material (8) is dried.

10. The method according to one of the preceding claims, **characterized in that** the particle foam material introduced into the mold cavity (6) is formed solely by the granulate material (8).

11. The method according to one of the preceding claims, **characterized in that** prior to step (b), at least one insert (12) is introduced into the mold cavity (6).

12. The method according to claim 11, **characterized in that** the at least one insert (12) is held positioned on a mold wall (5) of the molding tool (1).

13. The method according to one of the preceding claims, **characterized in that** the heating of the molding tool (1) is carried out in the immediate vicinity of at least individual ones of the mold walls (5) bounding the mold cavity (6).

14. The method according to one of the preceding claims, **characterized in that** even before step (a) of introducing the granulate material (8) into the mold cavity (6), a layer is applied to at least one mold wall (5) of the molding tool (1).

15. The method according to one of the preceding claims, **characterized in that** the particle foam material is formed by polystyrene, thermoplastic polyurethane, expandable polypropylene, or thermoplastic polybutylene terephthalate.

16. The method according to one of the preceding claims, **characterized in that** the particle foam material is hygroscopic.

17. The method according to one of the preceding claims, **characterized in that** the molding tool (1) is preheated prior to step (a).

18. The method according to one of the preceding claims, **characterized in that**, during at least one step of the method, the molding tool (1) is moved, preferably made to rotate, or moved in an oscillating manner.

19. The method according to one of the preceding claims, **characterized in that**, after step (c), the method comprises a step (d) of cooling the molding tool (1), whereby the molded body (7) situated in the mold cavity (6) solidifies.

20. The method according to one of the preceding claims, **characterized in that** the molding tool (1) has a device (18) for heating and/or cooling the molding tool (1), and that step (c), or a step (d) following step (c), of cooling is carried out by means of the device (18) for heating and/or cooling the molding tool (1).

21. The method according to claim 20, **characterized in that** the device (18) for heating and/or cooling is integrated within the molding tool (1) and at least a predominant part of the device (18) extends closer to the inner wall than to the outer wall of the molding tool (1).

22. The method according to claim 20 or 21, **characterized in that** the device (18) for heating the molding tool (1) comprises at least two channels (21, 22) extending in the molding tool (1), wherein a first channel (21) heats a first region of the molding tool (1), and a second channel (22) heats a second region of the molding tool (1), wherein the first channel (21), in contrast to the second channel (22), is applied with a heating medium.

23. The method according to one of the preceding claims, **characterized in that** the molding tool (1) is formed by a first tool part (3) and a second tool part (4), which can be removed from the first tool part (3).

24. The method according to one of the preceding claims, **characterized in that** after closing the mold cavity (6), the particle foam material introduced into the mold cavity (6) is compressed by the molding tool (1).

25. The method according to one of the preceding claims, **characterized in that** a molded body (7) is produced, which has regions of different qualities made from particle foam material.

26. The method according to one of the preceding claims, **characterized in that** the particle foam material introduced into the mold cavity (6) of the molding tool (1) comprises at least two different types of particles.

27. The method according to claim 26, **characterized in that** a first region of the mold cavity (6), preferably a first layer, is taken up by only or mostly a first type of particle, and that a second region, different from the first region, of the mold cavity (6) is taken up only or mostly by a second type of particle, which is different from the first type of particle.

28. The method according to claim 26 or 27, **characterized in that** the different types of particles are introduced into the mold cavity (6) successively.

29. The method according to one of the preceding claims, **characterized in that** during step (c), different regions of the mold cavity (6) are subjected to different conditions.

30. The method according to claim 29, **characterized in that** different walls of the mold cavity (6) are heated at different intensities and/or for different durations.

31. The method according to one of the preceding claims, **characterized in that** the particle foam material is enclosed by a shell, and, in step (a), is introduced into the mold cavity (6) of the molding tool (1) in the state enclosed by the shell.

## Revendications

1. Procédé de fabrication d'un corps moulé (7) à partir d'une matière de mousse particulaire dans une cavité de moule verrouillable (6) d'un outil de moule (1), comprenant les étapes suivantes :
(a) introduction de la matière de mousse particulaire sous la forme d'un granulé (8) dans la cavité du moule (6) de l'outil de moulage (1),
(b) verrouillage de la cavité du moule (6),
(c) chauffage de l'outil de moulage (1) et du granulé (8) qui y est contenu, ce qui permet de relier entre eux les particules du granulé (8),
dans lequel
pendant l'étape (c), l'introduction de l'énergie thermique à l'intérieur de la cavité du moule (6) a lieu exclusivement à travers la paroi de la cavité du moule (6), dans lequel la transition de l'énergie thermique de la paroi de la cavité du moule (6) vers l'intérieur de la cavité du moule (6) a lieu sans convection,
**caractérisé en ce que** l'outil de moulage (1) comprend un dispositif (18) pour le chauffage de l'outil de moulage (1) sous la forme d'un ou de plusieurs canaux d'un dispositif de régulation de température (10) pour un milieu chauffant et l'étape (c) est exécutée à l'aide du dispositif (18) pour le chauffage de l'outil de moulage (1).

2. Procédé selon la revendication 1, **caractérisé en ce que** l'au moins un canal s'étend dans une paroi de l'outil de moulage (1) et, dans l'étape (c), la chaleur est introduite au moyen d'un milieu chauffant qui est conduite à travers le canal, dans l'outil de moulage (1) et est transmise entre le canal et la paroi interne de la cavité de moule (6) par conduction thermique, dans lequel l'outil de moulage (1) - au moins dans la zone entre l'au moins un canal et la paroi interne de la cavité de moule (6) - est constitué de métal.

3. Procédé selon la revendication 1 ou 2, **caractérisé en ce que**, avant l'étape (c) du chauffage de l'outil de moulage (1), la cavité du moule (6) est fermée de manière étanche aux liquides, de préférence étanche à la vapeur et/ou étanche aux gaz.

4. Procédé selon l'une des revendications précédentes, **caractérisé en ce que**, dans le granulé (8) introduit dans l'étape (a) dans la cavité du moule (6), est contenu un agent propulseur ou **en ce qu'**un agent propulseur est introduit séparément du granulé (8) dans la cavité du moule (6), ce qui dilate le granulé (8) dans l'étape (c) au moyen de l'énergie thermique introduite, et le corps moulé (7) est alors réalisée dans sa forme spatiale grâce à la géométrie de la cavité du moule (6).

5. Procédé selon l'une des revendications précédentes, **caractérisé en ce que** le granulé (8) introduit dans la cavité du moule (6) est constitué d'un micro-granulé non encore pré-moussé.

6. Procédé selon la revendication 5, **caractérisé en ce que** le micro-granulé non encore pré-moussé introduit dans la cavité du moule (6), est pré-moussé directement dans la cavité du moule (6), dans lequel, de préférence, le pré-moussage du micro-granulé est effectué au moyen d'un émetteur IR.

7. Procédé selon l'une des revendications 1 à 4, **caractérisé en ce que** le granulé (8) introduit dans la cavité du moule (6) est constitué d'un micro-granulé au moins partiellement pré-moussé.

8. Procédé selon l'une des revendications précédentes, **caractérisé en ce que** le granulé (8) introduit dans la cavité du moule (6) est pré-chauffé au moyen d'un émetteur IR.

9. Procédé selon l'une des revendications précédentes, **caractérisé en ce que**, avant l'étape (a) de l'introduction du granulé (8) dans la cavité du moule (6), le granulé (8) est séché.

10. Procédé selon l'une des revendications précédentes, **caractérisé en ce que** la matière de mousse particulaire introduite dans la cavité du moule (6) est constituée exclusivement du granulé (8).

11. Procédé selon l'une des revendications précédentes, **caractérisé en ce que**, avant l'étape (b), au moins un insert (12) est introduit dans la cavité du moule (6).

12. Procédé selon la revendication 11, **caractérisé en ce que** l'au moins un insert (12) est maintenu positionné contre une paroi (5) de l'outil de moulage (1).

13. Procédé selon l'une des revendications précédentes, **caractérisé en ce que** le chauffage de l'outil de moulage (1) est effectué dans le voisinage immédiat d'au moins certaines des parois (5) limitant la cavité du moule (6).

14. Procédé selon l'une des revendications précédentes, **caractérisé en ce que**, encore avant l'étape (a) de l'introduction du granulé (8) dans la cavité du moule (6) une couche est appliquée au moins sur une paroi (5) de l'outil de moulage (1).

15. Procédé selon l'une des revendications précédentes, **caractérisé en ce que** la matière de mousse particulaire est constituée du polystyrène, de polyuréthane thermoplastique, de polypropylène expansible ou de polybutylène-téréphthalate thermoplastique.

16. Procédé selon l'une des revendications précédentes, **caractérisé en ce que** la matière de mousse particulaire est hygroscopique.

17. Procédé selon l'une des revendications précédentes, **caractérisé en ce que** l'outil de moulage (1) est pré-chauffée avant l'étape (a).

18. Procédé selon l'une des revendications précédentes, **caractérisé en ce que** l'outil de moulage (1) est déplacé pendant au moins une étape du procédé, de préférence mis en rotation ou déplacé de manière oscillante.

19. Procédé selon l'une des revendications précédentes, **caractérisé en ce que** le procédé comprend, après l'étape (c), une étape (d) de refroidissement de l'outil de moulage (1), ce qui solidifie le corps moulé (7) se trouvant dans la cavité du moule (6).

20. Procédé selon l'une des revendications précédentes, **caractérisé en ce que** l'outil de moulage (1) comprend un dispositif (18) pour le chauffage et/ou le refroidissement de l'outil de moulage (1) et **en ce que** l'étape (c) et/ou une étape (d), exécutée après l'étape (c), de refroidissement est effectuée au moyen du dispositif (18) pour le chauffage et/ou le refroidissement de l'outil de moulage (1).

21. Procédé selon la revendication 20, **caractérisé en ce que** le dispositif (18) pour le chauffage et/ou le refroidissement est intégré dans l'outil de moulage (1) et au moins une majeure partie du dispositif (18) s'étend plus près de la paroi interne que de la paroi externe de l'outil de moulage (1).

22. Procédé selon la revendication 20 ou 21, **caractérisé en ce que** le dispositif (18) pour le chauffage de l'outil de moulage (1) comprend au moins deux canaux (21, 22) s'étendant dans l'outil de moulage (1), dans lequel un premier canal (21) chauffe une première zone de l'outil de moulage (1) et un deuxième canal (22) chauffe une deuxième zone de l'outil de moulage (1), dans lequel le premier canal (21) est alimenté différemment du deuxième canal (22) avec un milieu chauffant.

23. Procédé selon l'une des revendications précédentes, **caractérisé en ce que** l'outil de moulage (1) est constitué d'une première partie d'outil (3) et d'une deuxième partie d'outil (4), qui peut être retirée de la première partie d'outil (3).

24. Procédé selon l'une des revendications précédentes, **caractérisé en ce que**, après la fermeture de la cavité du moule (6), la matière de mousse particulaire introduite dans la cavité du moule (6) est comprimée par l'outil de moulage (1).

25. Procédé selon l'une des revendications précédentes, **caractérisé en ce qu'**un corps moulé (7) est fabriqué, qui présente des zones constituées de matière de mousse particulaire de qualités différentes.

26. Procédé selon l'une des revendications précédentes, **caractérisé en ce que** la matière de mousse particulaire introduite dans la cavité de moule (6) de l'outil de moulage (1) comprend au moins deux types de particules différents.

27. Procédé selon la revendication 26, **caractérisé en ce qu'**une première zone de la cavité de moule (6), de préférence une première couche, exclusivement ou majoritairement englobée dans un premier type de particules, et **en ce qu'**une deuxième zone, différente de la première zone de la cavité de moule (6) est englobée exclusivement ou majoritairement par un deuxième type de particules qui est différent du premier type de particules.

28. Procédé selon la revendication 26 ou 27, **caractérisé en ce que** les différents types de particules sont introduits successivement dans la cavité du moule (6).

29. Procédé selon l'une des revendications précédentes, **caractérisé en ce que**, pendant l'étape (c), différentes zones de la cavité du moule (6) sont soumises à des conditions différentes.

30. Procédé selon la revendication 29, **caractérisé en ce que** différentes parois de la cavité du moule (6) sont chauffés avec des intensités différentes et/ou pendant des temps différents.

31. Procédé selon l'une des revendications précédentes, **caractérisé en ce que** la matière de mousse particulaire est entourée d'une enveloppe et, dans l'étape (a), dans l'état entouré par l'enveloppe, introduite dans la cavité de moule (6) de l'outil de moulage (1).
